# EUROPÄISCHE PATENTANMELDUNG

(11) **EP 1 055 866 A2**
(43) Veröffentlichungstag der Anmeldung: **29.11.2000**
(21) Anmeldenummer: 00109685.8
(22) Anmeldetag: 06.05.2000
(51) Int. Cl.: F21S 8/10, F21V 8/00

(54) **Kraftfahrzeugleuchte**

(30) Priorität: 26.05.1999 DE 19923919
(71) Anmelder: Patent-Treuhand-Gesellschaft für elektrische Glühlampen mbH, 81543 München (DE)
(72) Erfinder: Enders, Martin, 81545 München (DE)

(57) **Zusammenfassung**

Die Erfindung betrifft eine Kraftfahrzeugleuchte mit einer Lichtquelle (4), mindestens einem Lichtleiter (6), der optisch an die Lichtquelle (4) gekoppelt ist, und Betriebsmitteln (5) für die Lichtquelle (4). Der Lichtleiter (6) weist eine Lichtaustrittsfläche (8) auf, deren Krümmung erfindungsgemäß an die Krümmung des Kraftfahrzeugs angepaßt ist.

## Beschreibung

Die Erfindung betrifft eine Kraftfahrzeugleuchte gemäß dem Oberbegriff des Patentanspruchs 1.

### I. Darstellung der Erfindung

Es ist die Aufgabe der Erfindung, eine Kraftfahrzeugleuchte bereitzustellen, die unabhängig von der Form der Lichtquelle im Kraftfahrzeug verwendbar ist.

Diese Aufgabe wird erfindungsgemäß durch die kennzeichnenden Merkmale des Patentanspruchs 1 gelöst. Besonders vorteilhafte Ausführungen der Erfindung sind in den Unteransprüchen beschrieben.

Die erfindungsgemäße Kraftfahrzeugleuchte weist eine Lichtquelle, mindestens einen Lichtleiter, der optisch an die Lichtquelle gekoppelt ist, und Betriebsmitteln für die Lichtquelle auf. Der Lichtleiter besitzt erfindungsgemäß eine Lichtaustrittsfläche, deren Krümmung an die Krümmung des Kraftfahrzeuges angepaßt ist. Die vorgenannten Merkmale ermöglichen es, die erfindungsgemäße Kraftfahrzeugleuchte mit handelsüblichen Lichtquellen und Betriebsmitteln auszustatten und mit einfachen Mitteln an unterschiedliche Fahrzeugformen anzupassen. Zur Anpassung der erfindungsgemäßen Leuchte an die Kraftfahrzeugform genügt es, die Form des mindestens einen Lichtleiters, insbesondere die Krümmung seiner Lichtaustrittsfläche an die Gestalt des entsprechenden Kraftfahrzeugbereiches anzugleichen.

Gemäß der besonders bevorzugten Ausführungsbeispiele der Erfindung ist die Krümmung der Lichtaustrittsfläche des Lichtleiters an die Kontur der Fahrzeug-Heckscheibe oder an die Kontur der Kraftfahrzeugkarosserie angepaßt. Dadurch lassen sich mit handelsüblichen Lampen bestückte, optimal auf die Fahrzeugform abgstimmte Bremsleuchten und Blinklichtleuchten realisieren.

Als Lichtquelle wird vorteilhafterweise eine Neon-Gasentladungslampe oder eine Leuchtstofflampe verwendet. Diese Lampen besitzen eine hohe Lichtausbeute, eine lange Lebensdauer und können mit geringen Abmessungen hergestellt werden. Außerdem kann mit ihrer Hilfe auf einfache Weise rotes oder orangefarbenes Licht erzeugt werden. Als Betriebsmittel für die vorgenannten Lampen wird vorteilhafterweise ein handelsübliches Elektronisches Vorschaltgerät verwendet. Derartige Vorschaltgeräte zeichnen sich durch eine kompakte Bauweise aus. Um eine möglichst gute Lichteinkopplung in den mindestens einen Lichtleiter zu gewährleisten, ist der mindestens eine Lichtleiter mit einer rohrförmigen Aussparung zur Aufnahme der Lichtquelle versehen. Der Durchmesser der Aussparung ist vorzugsweise auf die Abmessungen der Lichtquelle abgestimmt. Zur Verbesserung der elektromagnetischen Verträglichkeit der erfindungsgemäßen Kraftfahrzeugleuchte ist das Elektronische Vorschaltgerät mit einer elektrisch leitenden Schicht oder Folie oder mit einem Metallgehäuse ausgestattet, die mit dem Massepotential oder dem Erdpotential verbunden ist. Außerdem ist zu demselben Zweck die Lampe oder/und der mindestens eine Lichtleiter mit einer elektrisch leitenden Schicht oder Folie versehen, die mit dem Massepotential oder dem Erdpotential verbunden ist.

### II. Beschreibung des bevorzugten Ausführungsbeispiels

Nachstehend wird die Erfindung anhand eines bevorzugten Ausführungsbeispiels näher erläutert. Es zeigen:
- Figur 1: einen Querschnitt durch eine erfindungsgemäße Kraftfahrzeugleuchte gemäß eines bevorzugten Ausführungsbeispiels der Erfindung
- Figur 2: eine Draufsicht auf das in Figur 1 abgebildete Ausführungsbeispiel in schematischer Darstellung

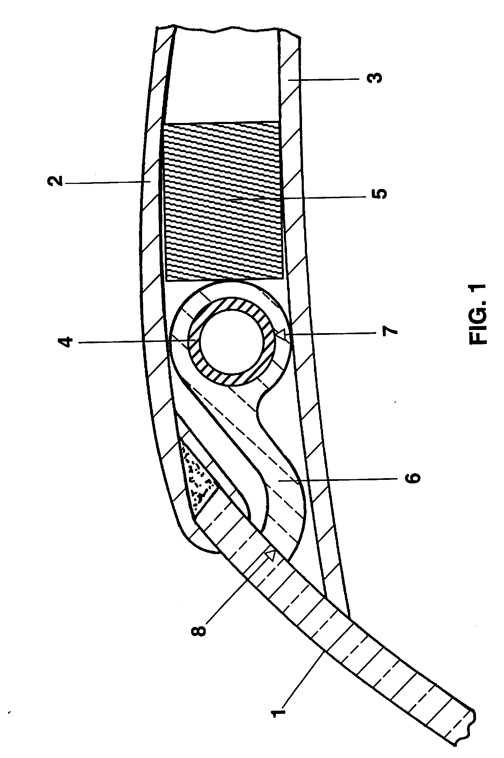

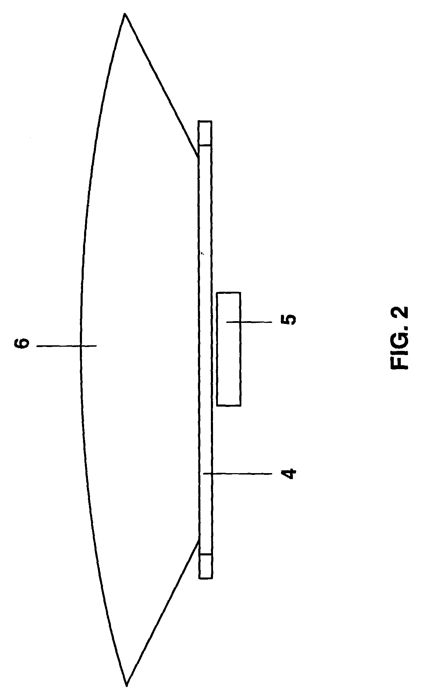

Bei dem in den Figuren 1 und 2 abgebildeten bevorzugten Ausführungsbeispiel der Erfindung handelt es sich um eine hochgesetzte Bremsleuchte, die am oberen Rand der Fahrzeugheckscheibe 1 angeordnet ist. Die Bremsleuchte ist im Zwischenraum zwischen dem Fahrzeugdach 2 und dem Dachhimmel 3 angeordnet. Sie besteht aus einer stabförmigen Neon-Gasentladungslampe 4, einem handelsüblichen Elektronischen Vorschaltgerät 5 zum Betrieb der Lampe 4 und einem Lichtleiter 6. Die stabförmige Neon-Gasentladungslampe 4 ist in einer Aussparung 7 des Lichtleiters 6 angordnet, deren Durchmesser paßgerecht auf den Außendurchmesser der Neon-Gasentladungslampe 4 abgestimmt ist. Der Lichtleiter 6 weist eine langgestreckte Lichtaustrittsfläche 8 auf, deren Krümmung an die Krümmung der Heckscheibe 1 angepaßt ist. Die Lichtaustrittsfläche 8 des Lichtleiters 6 liegt formschlüssig an der Heckscheibe 1 an. Zur Verbesserung der elektromagnetischen Verträglichkeit der Bremsleuchte ist das Lampengefäß der Neon-Gasentladungslampe 4 mit einer lichtdurchlässigen, elektrisch leitfähigen Indium-Zinn-Oxid-Schicht (ITO-Schicht) versehen, die an das Massepotential des Vorschaltgerätes 5 angeschlossen ist. Die Außenfläche des Lichtleiters 6 ist zum Schutz und zur Erzielung des Lichtleiteffektes sowie zur Einkopplung des Lichts in den Lichtleiter 6 als auch zur Verbesserung der Elektromagnetischen Verträglichkeit der Leuchte mit einer elektrisch leitenden, lichtreflektierenden Beschichtung versehen, die ebenfalls an das Massepotential des Vorschaltgerätes 5 angeschlossen ist. Außerdem ist, ebenfalls zur Verbesserung der Elektromagnetischen Verträglichkeit, die Innenwand des Vorschaltgerätgehäuses metallisiert und mit dem Massepotential des Vorschaltgerätes 5 verbunden.

Die Erfindung beschränkt sich nicht auf das oben näher erläuterte Ausführungsbeispiel. Die erfindungsgemäße Kraftfahrzeugleuchte kann, beispielsweise bei einem Cabriolet, auch als Bremsleuchte ausgebildet sein, die an der Fahrzeugheckklappe angeordnet ist. In diesem Fall ist die Krümmung der Lichtaustrittsfläche des Lichtleiters an die Kontur oder Form der Heckklappe angepaßt. Die dazugehörende Lampe und das zum Betrieb der Lampe erforderliche Vorschaltgerät sind beispielsweise an der Innenwand der Heckklappe angeordnet. Die erfindungsgemäße Kraftfahrzeugleuchte kann aber auch als Blinklichtleuchte ausgebildet sein, die im Heck- oder Frontbereich des Fahrzeugs angeordnet ist. In diesem Fall ist die Krümmung der Lichtaustrittsfläche des Lichtleiters an die Kontur des Fahrzeugheckbereiches beziehungsweise Frontbereiches angepaßt.

## Patentansprüche

1. Kraftfahrzeugleuchte mit einer Lichtquelle (4), mindestens einem Lichtleiter (6), der optisch an die Lichtquelle (4) gekoppelt ist, und Betriebsmitteln (5) für die Lichtquelle (4), dadurch gekennzeichnet, daß der mindestens eine Lichtleiter (6) eine Lichtaustrittsfläche (8) aufweist, deren Krümmung an die Krümmung des Kraftfahrzeuges angepaßt ist.

2. Kraftfahrzeugleuchte nach Anspruch 1, dadurch gekennzeichnet, daß die Krümmung der Lichtaustrittsfläche (8) des mindestens einen Lichtleiters (6) an die Kontur der Fahrzeug-Heckscheibe (1) angepaßt ist.

3. Kraftfahrzeugleuchte nach Anspruch 1, dadurch gekennzeichnet, daß die Krümmung der Lichtaustrittsfläche des mindestens einen Lichtleiters an die Kontur der Fahrzeugkarosserie angepaßt ist.

4. Kraftfahrzeugleuchte nach Anspruch 1, dadurch gekennzeichnet, daß die Lichtquelle (4) eine Neon-Gasentladungslampe oder eine Leuchtstofflampe ist.

5. Kraftfahrzeugleuchte nach Anspruch 4, dadurch gekennzeichnet, daß die Betriebsmittel (5) als Elektronisches Vorschaltgerät ausgebildet sind.

6. Kraftfahrzeugleuchte nach Anspruch 1, dadurch gekennzeichnet, daß der mindestens eine Lichtleiter (6) eine rohrförmige Aussparung (7) zur Aufnahme der Lichtquelle (4) aufweist.

7. Kraftfahrzeugleuchte nach Anspruch 2, dadurch gekennzeichnet, daß die Kraftfahrzeugleuchte einen derart flachen Aufbau besitzt, daß sie zwischen dem Metalldach (1) und dem Dachhimmel (3) des Kraftfahrzeugs einsetzbar ist.

8. Kraftfahrzeugleuchte nach Anspruch 5 oder 6, dadurch gekennzeichnet, daß das Elektronische Vorschaltgerät (5) und die Lampe (4) oder der mindestens eine Lichtleiter (6) eine elektrisch Schicht oder Folie, die an das Massepotential oder Erdpotential angeschlossen sind, aufweisen.
